# EUROPÄISCHE PATENTSCHRIFT

(11) **EP 1 262 673 B1**
(45) Veröffentlichungstag und Bekanntmachung des Hinweises auf die Patenterteilung: **05.10.2011**
(21) Anmeldenummer: 02008783.9
(22) Anmeldetag: 19.04.2002
(51) Int. Cl.: F16C 29/06, F16C 33/66

(54) **Linearwälzlagerelement**
Linear rolling bearing
Palier à roulement linéaire

(30) Priorität: 31.05.2001 DE 10126439
(43) Veröffentlichungstag der Anmeldung: 04.12.2002
(73) Patentinhaber: Schaeffler Technologies GmbH & Co. KG, 91074 Herzogenaurach (DE)
(72) Erfinder: Menges, Martin, 66424 Homburg (DE); Elicker, Thomas, 66564 Ottweiler (DE); Franz, Ralf, 67655 Kaiserslautern (DE)

(56) Entgegenhaltungen:
- EP-A- 0 803 655
- EP-A- 0 971 140
- DE-A- 4 141 038
- DE-A- 4 331 014
- DE-A- 10 026 587
- DE-A- 19 525 219
- DE-A- 19 920 477
- US-A- 5 308 165
- US-A- 6 024 490

## Beschreibung

### Gebiet der Erfindung

Die Erfindung betrifft ein Linearwälzlagerelement für die Lagerung an der Lauffläche einer Führungsschiene, mit einem Tragkörper, der für einen Wälzkörperumlauf jeweils eine zur Bewegungsrichtung des Tragkörpers parallele Tragzone und einen Rücklaufkanal aufweist, die über zwei an dem Tragkörper in stirnseitig angrenzenden Kopfstücken angeordnete Umlenkkanäle miteinander verbunden sind, wobei die Kopfstücke Schmierstoffleitungen enthalten und in der Tragzone, dem Rücklaufkanal und den Umlenkkanälen Führungsmittel in der Form einer Kunststoffbeschichtung für die Wälzkörper angeordnet sind.

Ein solches Lagerelement ist aus der Druckschrift DE 43 31 014 A1 bekannt. Dort dient in der Baueinheit eines Kopfstücks jeweils eine innere Halteplatte und eine äußere Halteplatte der Halterung eines Frontabstreifers. Das Kopfstück ist außerdem mit Kanälen für die Schmierstoffversorgung versehen und enthält zusätzlich einen Umlenkkörper. Es ist mit seinen Teilen an dem Tragkörper mit Schrauben befestigt. Infolge des mehrere Einzelteile enthaltenden Kopfstücks ergibt sich bei diesem Lagerelement eine arbeitsaufwendige Herstellung.

Das Dokument EP 0 803 655 A beschreibt ein Verfahren zur Herstellung eines Linearwälzlagerelementes, an dessen Tragkörper stirnseitig angrenzende Kopfstücke mittels einer Schnappverbindung befestigt sind.

Bei einem durch das Dokument EP 0 971 140 A offenbarten Führungswagen einer Linearführungseinrichtung ist an den Enden des Tragkörpers jeweils eine Kopfbaugruppe angeordnet, die aus einem Kopfstück, einer Zwischenplatte, einer Schmiereinsatzplatte, einer Abstreiferplatte und einer Armierungsplatte besteht. Ein Schmierstoffwegesystem ist wenigstens zum Teil in einem Grenzbereich zwischen dieser Kopfstückeinheit und dem mit Wagenhauptkörper bezeichneten Tragkörper untergebracht. Die Einzelteile der Kopfbaugruppe sind mit Befestigungsschrauben an dem Wagenhauptkörper befestigt. Auch hier ergibt sich ebenso, wie bei dem Lagerelement nach dem Dokument DE 43 31 014 A1 infolge der mehrere Einzelteile enthaltenden Kopfbaugruppe eine arbeitsaufwendige Herstellung.

### Zusammenfassung der Erfindung

Mit der vorliegenden Erfindung soll die Montage des von dem Tragkörper und den Kopfstücken gebildeten Führungswagens erleichtert und beschleunigt werden.

Diese Aufgabe wird erfindungsgemäß dadurch gelöst, dass jedes Kopfstück eine an dem Tragkörper stirnseitig angeordnete, als Käfig bezeichnete Kunststoffkomponente des Tragkörpers im Umlenkbereich und eine/ an dem Käfig angepasste und angesetzte, einstückige Verschlussplatte, an welcher am oberen Ende eine Verschlussleiste einstückig angeformt ist, aufweist; dass die Verschlussplatte mit der angeformten Verschlussleiste die Schmierstoffleitungen enthält, wobei die einstückig angeformte Verschlussleiste mit einer Schmierstoffleitung (19) versehen ist, die mit Schmierstoffleitungen in der einstückigen Verschlussplatte verbunden ist und dass die Verschlussplatte mit der Verschlussleiste an dem Käfig mit integrierten Klammern, Klemmnasen, Haltenocken oder Bohrungen positioniert und fixiert ist. für das Positionieren und Fixieren der Verschlussplatte am zugehörigen. Käfig des Tragkörpers sind Schraubverbindungen nicht erforderlich. Auf diese Weise ergibt sich bei dem Lagerelement eine reduzierte Komponentenzahl mit gegenüber vorbekannten Lagerelementen weniger Schraubverbindungen. Außerdem wird die Anzahl der Fügestellen verringert, so dass das Eindringen äußerer Schmutzpartikel erschwert ist. Die Anpassung der als Käfig bezeichneten Kunststoffkomponente des Tragkörpers im Umlenkbereich an die als Schmierstoffverteiler wirkende Verschlussplatte hat jeweils eine verbesserte Abdichtung gegen eindringenden äußeren Schmutz zur Folge. Die Umlenkbereiche sind bei dem erfindungsgemäßen Lagerelement vollständig umschlossen bzw. gekapselt. Eine solche Anordnung gewinnt zunehmend Bedeutung beim Betrieb von Führungswagen mit Sperrluft (mit innerem Überdruck).

In der Verschlussleiste können Nachschmierbohrungen eingebracht sein, über welche die Schmierstoffleitung der Verschlussleiste und die Schmierstoffleitung der Verschlussplatte nach außen geöffnet sind. Die Verschlussleiste kann eine obere Nachschmierbohrung und/oder zwei seitliche Nachschmierbohrungen enthalten.

Für die Bildung der Umlenkkanäle können an der Innenseite der Verschlussplatte Umlenkschalen befestigt sein. Dabei kann zwischen der Innenseite der Verschlussplatte und jeder Umlenkschale eine elastische Trennschicht angeordnet sein.

Jeweils zwei Verschlußplatten der erfindungsgemäßen Lagerelemente können zueinander spiegelverkehrt an dem Tragkörper angeordnet und mittels zweier Längsdichtungen miteinander verbunden werden, wobei die Längsdichtungen in entsprechend gestaltete Aufnahmen des Tragkörpers eingelegt oder eingeschoben werden.

Für eine Abdichtung der jeweiligen Umlenkzone des Tragkörpers nach außen können in der Verschlußplatte Dichtungselemente, beispielsweise eine Rundschnur, aufgenommen werden.

### Kurze Beschreibung der Zeichnung

Ausführungsbeispiele der Erfindung sind in der Zeichnung dargestellt und werden im folgenden näher beschrieben.

Es zeigen:
- Figur 1: eine Verschlussplatte für ein erfindungsgemäßes Lagerelement in perspektivischer Darstellung;
- Figur 2: einen für die Aufnahme der Verschlußplatte nach Figur 1 angepaßten Tragkörper für ein erfindungsgemäßes Lagerelement in perspektivischer Darstellung;
- Figur 3: eine schematische Darstellung der Innenseite der Verschlußplatte nach Figur 1;
- Figur 4: ein an einer Führungsschiene längsverschieblich angeordnetes vorbekanntes Lagerelement in der Draufsicht;
- Figur 5: einen Endbereich des Tragkörpers ohne Kopfstück des Lagerelementes nach Figur 4 in vergrößerter Darstellung;
- Figur 6: die Verschlußplatte eines erfindungsgemäßen Lagerelementes in einer Seitenansicht;
- Figur 7: die Verschlußplatte nach Figur 6 in der Draufsicht;
- Figur 8: eine mit Umlenkschalen versehene Verschlußplatte eines erfindungsgemäßen Lagerelementes in einer Seitenansicht;
- Figur 9: eine mit Umlenkschalen und elastischen Trennschichten versehene Verschlußplatte eines erfindungsgemäßen Lagerelementes in einer Seitenansicht;
- Figur 10: eine weitere Verschlußplatte für ein erfindungsgemäßes Lagerelement in perspektivischer Darstellung;
- Figur 11: einen weiteren für die Aufnahme der Verschlußplatte nach Figur 10 angepaßten Tragkörper für ein erfindungsgemäßes Lagerelement in perspektivischer Darstellung.

### Ausführliche Beschreibung der Zeichnung

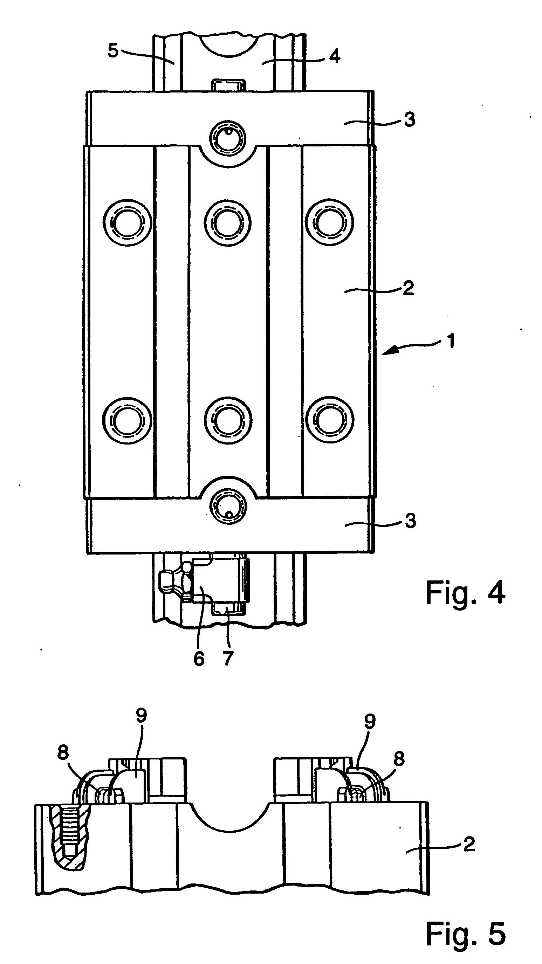

Das in den Figuren 4 und 5 dargestellte vorbekannte Lagerelement 1 weist zwei an einem Tragkörper 2 stirnseitig befestigte Kopfstücke 3 auf. Jedes Kopfstück 3 enthält einen Umlenkkörper für die Umlenkung von Wälzkörpern aus einem Tragbereich in einen Rücklaufbereich des Lagerelementes 1 oder umgekehrt. Das Lagerelement 1 mit seinen beiden Kopfstücken 3 ist längs einer Führungsschiene 4 geradlinig verfahrbar, welche Laufflächen 5 aufweist. An einem der Kopfstücke 3 ist ein Schmiernippelträger 6 mit einem Schmiernippel mittels einer Schraube 7 befestigt. Der über den Schmiernippel eingeförderte Schmierstoff gelangt über Schmierstoffkanäle, welche in dem Kopfstück 3 angeordnet sind, zu den Wälzkörpern.

Wie sich aus Figur 5 ergibt, ragen Führungsstege für die Wälzkörper im Umlenkbereich aus dem Tragkörper 2 stirnseitig heraus und bilden mit Umlenksegmenten 8 Führungsborde 9. Sie dienen einer exakten Führung der Wälzkörper im Umlenkbereich.

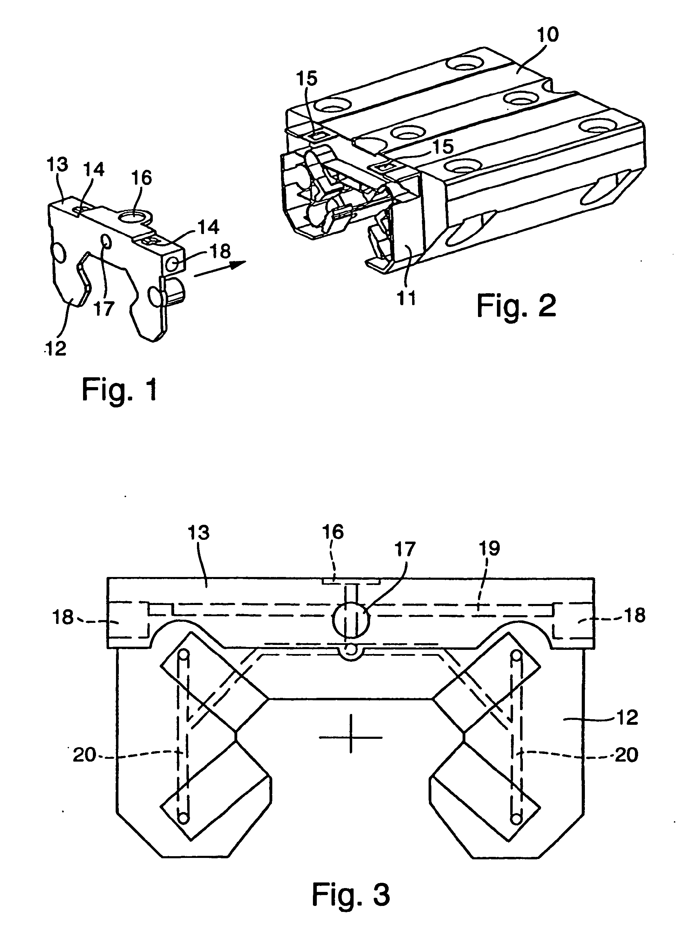

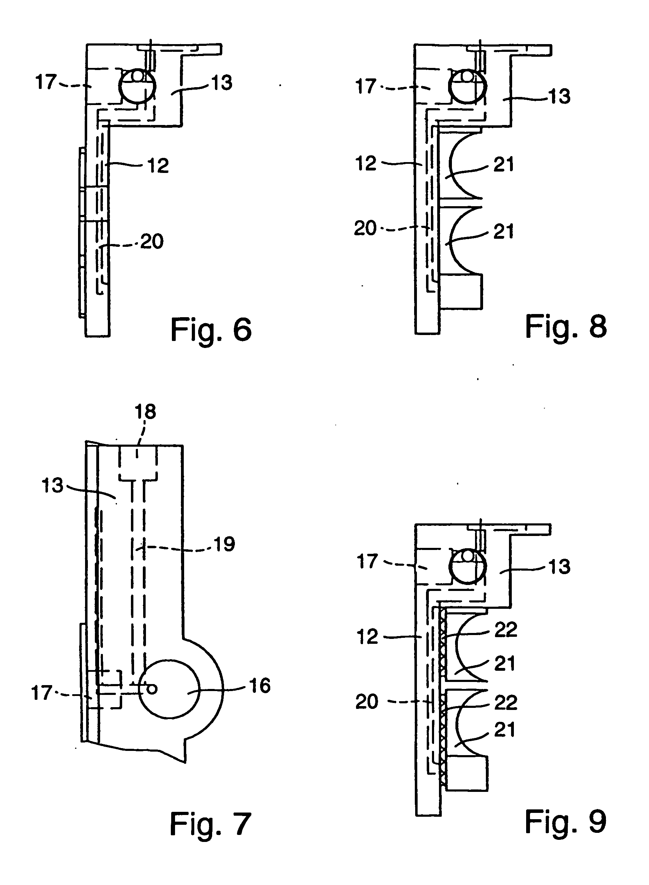

Wie die Figuren 1 und 2 zeigen, besteht bei einem erfindungsgemäßen Lagerelement das Kopfstück jeweils aus einem an dem Tragkörper 10 stirnseitig angeordneten Käfig 11 und einer Verschlußplatte 12. Diese wird hier parallel zur Längsrichtung der Führungsschiene 4 in Pfeilrichtung an den Tragkörper 10 herangeführt und auf den Käfig 11 aufgesetzt. Am oberen Ende der Verschlußplatte 12 ist eine Verschlußleiste 13 einstückig angeformt, die mit Haltenocken 14 in Ausnehmungen von Haltelaschen 15 des Käfigs 11 einrasten. Die Verschlußplatte 12 mit der Verschlußleiste 13 weist eine obere Nachschmierbohrung 16, eine stirnseitige Nachschmierbohrung 17 und zwei seitliche Nachschmierbohrungen 18 auf, von welchen in Figur 1 nur eine sichtbar ist. Die Figuren 3, 6 und 7 zeigen schematisch, daß die Bohrungen 16, 17 und 18 mit einer Schmierstoffleitung 19 in der an die Verschlußplatte 12 angeformten Verschlußleiste 13 verbunden sind, welche wiederum mit Schmierstoffleitungen 20 in der Verschlußplatte 12 verbunden sind. Über die Leitungen 20 gelangt der Schmierstoff zu den Umlenkbereichen und den dort befindlichen Wälzkörpern. In Figur 8 sind an der Innenseite der Verschlußplatte 12 Umlenkschalen 21 befestigt, während solche Umlenkschalen in Figur 9 über elastische Trennschichten 22 mit der Verschlußplatte 12 verbunden sind.

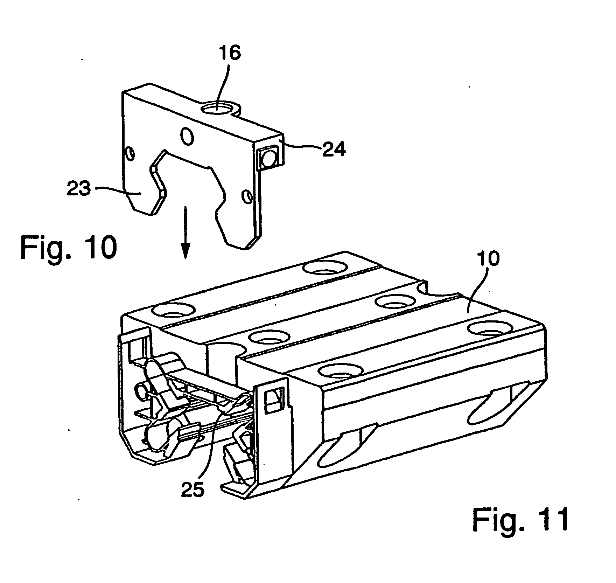

Die Figuren 10 und 11 zeigen eine an dem Tragkörper 10 angeordnete, gegenüber den Figuren 1 und 2 abgewandelte Ausführung des Lagerelementes, bei welchem die Verschlußplatte 23 mit der Verschlußleiste 24 rechtwinklig zur Längsrichtung der Führungsschiene 4 in Pfeilrichtung an den Tragkörper 10 heranbewegt und auf den dort angebrachten Käfig 25 gesteckt wird.

### Bezugszahlenliste

- 1: Lagerelement
- 2: Tragkörper
- 3: Kopfstück
- 4: Führungsschiene
- 5: Lauffläche
- 6: Schmiernippelträger
- 7: Schraube
- 8: Umlenksegment
- 9: Führungsbord
- 10: Tragkörper
- 11: Käfig
- 12: Verschlußplatte
- 13: Verschlußleiste
- 14: Haltenocken
- 15: Haltelasche
- 16: Obere Nachschmierbohrung
- 17: Stirnseitige Nachschmierbohrung
- 18: Seitliche Nachschmierbohrung
- 19: Schmierstoffleitung der Leiste
- 20: Schmierstoffleitung der Platte
- 21: Umlenkschale
- 22: Elastische Trennschicht
- 23: Verschlußplatte
- 24: Verschlußleiste
- 25: Käfig

## Patentansprüche

1. Linearwälzlagerelement für die Lagerung an der Lauffläche (5) einer Führungsschiene (4), mit einem Tragkörper (10), der für einen Wälzkörperumlauf jeweils eine zur Bewegungsrichtung des Tragkörpers (10) parallele Tragzone und einen Rücklaufkanal aufweist, die über zwei an dem Tragkörper (10) in stirnseitig angrenzenden Kopfstücken angeordnete Umlenkkanäle miteinander verbunden sind, wobei die Kopfstücke Schmierstoffleitungen (19, 20) enthalten und in der Tragzone, dem Rücklaufkanal und den Umlenkkanälen Führungsmittel in der Form einer Kunststoffbeschichtung für die Wälzkörper angeordnet sind, **dadurch gekennzeichnet, dass** jedes Kopfstück eine an dem Tragkörper (10) stirnseitig angeordnete, als Käfig (11, 25) bezeichnete Kunststoffkomponente des Tragkörpers (10) im Umlenkbereich und eine an dem Käfig (11, 25) angepasste und angesetzte, einstückige Verschlussplatte (12, 23), an welcher am oberen Ende eine Verschlussleiste (13, 24) einstückig angeformt ist, aufweist; dass die Verschlussplatte (12, 23) mit der angeformten Verschlussleiste (13, 24) die Schmierstoffleitungen (19, 20) enthält, wobei die einstückig angeformte Verschlussleiste (13, 24) mit einer Schmierstoffleitung (19) versehen ist, die mit Schmierstoffleitungen (20) in der einstückigen Verschlussplatte (12, 23) verbunden ist und dass Verschlussplatte (12, 23) mit der Verschlussleiste (13, 24) an dem Käfig (11, 25) mit integrierten Klammern, Klemmnasen, Haltenocken (14) oder Bohrungen positioniert und fixiert ist.

2. Lagerelement nach Anspruch 1, **dadurch gekennzeichnet, dass** die Verschlussleiste (13) der Verschlussplatte (12) mit Haltenocken (14) in Ausnehmungen von Haltelaschen (15) des Käfigs (11) eingerastet ist.

3. Lagerelement nach Anspruch 1, **dadurch gekennzeichnet, dass** in die Verschlussleiste (13, 24) Nachschmierbohrungen (16, 17, 18) eingebracht sind, über welche die Schmierstoffleitung (19) der Verschlussleiste (13, 24) und die mit dieser verbundenen Schmierstoffleitungen (20) der Verschlussplatte (12, 23) nach außen geöffnet sind.

4. Lagerelement nach Anspruch 3, **dadurch gekennzeichnet, dass** die Verschlussleiste (13, 24) eine obere Nachschmierbohrung (16) und / oder zwei seitliche Nachschmierbohrungen (18) sowie eine stirnseitige Nachschmierbohrung (17) enthält.

5. Lagerelement nach Anspruch 1, **dadurch gekennzeichnet, dass** für die Bildung der Umlenkkanäle an der Innenseite der Verschlussplatte (12, 23) Umlenkschalen (21) befestigt sind.

6. Lagerelement nach Anspruch 5, **dadurch gekennzeichnet, dass** zwischen der Innenseite der Verschlussplatte (12, 23) und jeder Umlenkschale (21) eine elastische Trennschicht (22) angeordnet ist.

## Claims

1. Linear anti-friction bearing element for mounting on the running face (5) of a guide rail (4), having a support body (10) which has in each case one support zone which is parallel to the movement direction of the support body (10) and one return channel for a circulation of rolling bodies, which support zone and return channel are connected to one another via two deflection channels which are arranged on the support body (10) in head pieces which are adjacent on the end side, the head pieces containing lubricant lines (19, 20) and guide means in the form of a plastic coating for the rolling bodies being arranged in the support zone, the return channel and the deflection channels, **characterized in that** each head piece has a plastic component of the support body (10) in the deflection region, which plastic component is arranged on the end side of the support body (10) and is called a cage (11, 25), and a single-piece closure plate (12, 23) which is adapted and attached to the cage (11, 25) and on which a closure strip (13, 24) is integrally formed in one piece at the upper end, **in that** the closure plate (12, 23) with the integrally formed closure strip (13, 24) contains the lubricant lines (19, 20), the closure strip (13, 24) which is integrally formed in one piece being provided with a lubricant line (19) which is connected to lubricant lines (20) in the single-piece closure plate (12, 23), and **in that** the closure plate (12, 23) with the closure strip (13, 24) is positioned and fixed on the cage (11, 25) by way of integrated clips, clamping lugs, holding cams (14) or holes.

2. Bearing element according to Claim 1, **characterized in that** the closure strip (13) of the closure plate (12) is latched by way of holding cams (14) in recesses of holding brackets (15) of the cage (11) .

3. Bearing element according to Claim 1, **characterized in that** relubricating holes (16, 17, 18) are made in the closure strip (13, 24), via which relubricating holes (16, 17, 18) the lubricant line (19) of the closure strip (13, 24) and the lubricant lines (20) of the closure plate (12, 23) which are connected to the former are open to the outside.

4. Bearing element according to Claim 3, **characterized in that** the closure strip (13, 24) contains an upper relubricating hole (16) and/or two lateral relubricating holes (18) and an end-side relubricating hole (17).

5. Bearing element according to Claim 1, **characterized in that** deflection shells (21) are fastened to the inner side of the closure plate (12, 23) for the formation of the deflection channels.

6. Bearing element according to Claim 5, **characterized in that** an elastic separating layer (22) is arranged between the inner side of the closure plate (12, 23) and each deflection shell (21).

## Revendications

1. Elément de palier à roulement linéaire pour un support sur palier sur la surface de roulement (5) d'un rail de guidage (4), comprenant un corps porteur (10) qui présente, pour une circulation de corps de roulement, à chaque fois une zone porteuse parallèle à la direction de déplacement du corps porteur (10) et un canal de retour, lesquels sont reliés l'un à l'autre par le biais de deux canaux de déviation disposés sur le corps porteur (10) dans des parties de tête adjacentes du côté frontal, les parties de tête contenant des conduites de lubrifiant (19, 20) et des moyens de guidage sous forme d'un revêtement en plastique pour les corps de roulement étant disposés dans la zone porteuse, le canal de retour et les canaux de déviation, **caractérisé en ce que** chaque partie de tête présente un composant en plastique du corps porteur (10) disposé du côté frontal sur le corps porteur (10), appelé cage (11, 25), dans la région de déviation, et une plaque de fermeture (12, 23) d'une seule pièce, adaptée à et rapportée contre la cage (11, 25), sur laquelle est façonnée d'une seule pièce à l'extrémité supérieure une barrette de fermeture (13, 24), **en ce que** la plaque de fermeture (12, 23) avec la barrette de fermeture (13, 24) façonnée sur elle contient les conduites de lubrifiant (19, 20), la barrette de fermeture (13, 24) façonnée d'une seule pièce étant pourvue d'une conduite de lubrifiant (19) qui est raccordée à des conduites de lubrifiant (20) dans la plaque de fermeture d'une seule pièce (12, 23), et **en ce que** la plaque de fermeture (12, 23) avec la barrette de fermeture (13, 24) est positionnée et fixée sur la cage (11, 25) avec des pinces, des nez de serrage, des cames de retenue (14) ou des alésages intégrés.

2. Elément de palier selon la revendication 1, **caractérisé en ce que** la barrette de fermeture (13) de la plaque de fermeture (12) est encliquetée avec des cames de retenue (14) dans des évidements de pattes de retenue (15) de la cage (11).

3. Elément de palier selon la revendication 1, **caractérisé en ce que** des alésages de relubrification (16, 17, 18) sont pratiqués dans la barrette de fermeture (13, 24), par le biais desquels la conduite de lubrifiant (19) de la barrette de fermeture (13, 24) et les conduites de lubrifiant (20) connectées à celle-ci, de la plaque de fermeture (12, 23), sont ouvertes vers l'extérieur.

4. Elément de palier selon la revendication 3, **caractérisé en ce que** la barrette de fermeture (13, 24) contient un alésage de relubrification supérieur (16) et/ou deux alésages de relubrification latéraux (18) ainsi qu'un alésage de relubrification (17) du côté frontal.

5. Elément de palier selon la revendication 1, **caractérisé en ce que** des coques de déviation (21) sont fixées, pour la formation des canaux de déviation, sur le côté intérieur de la plaque de fermeture (12, 23).

6. Elément de palier selon la revendication 5, **caractérisé en ce qu'**entre le côté intérieur de la plaque de fermeture (12, 23) et chaque coque de déviation (21) est disposée une couche de séparation élastique (22).
